# FASCICULE DE BREVET EUROPEEN

(11) **EP 4 256 295 B1**
(45) Date de publication et mention de la délivrance du brevet: **28.01.2026**
(21) Numéro de dépôt: 21830457.4
(22) Date de dépôt: 26.11.2021
(51) Int. Cl.: G01K 11/00, G01B 11/06, G01N 21/84, B29C 37/00, B29C 35/00, B29C 48/21, B29D 30/06, B29D 29/00, G01N 21/3581

(54) **PROCÉDÉ DE DÉTERMINATION DE LA TEMPÉRATURE D'UN MATÉRIAU CAOUTCHOUTIQUE ENTRANT DANS LA COMPOSITION D'UN PNEUMATIQUE**
VERFAHREN ZUR BESTIMMUNG DER TEMPERATUR EINES IN DIE ZUSAMMENSETZUNG EINES REIFENS EINKOMMENDEN GUMMIARTIGEN MATERIALS
METHOD FOR DETERMINING THE TEMPERATURE OF A RUBBERY MATERIAL ENTERING INTO THE COMPOSITION OF A TYRE

(30) Priorité: 07.12.2020 FR 2012765
(43) Date de publication de la demande: 11.10.2023
(73) Titulaire: COMPAGNIE GENERALE DES ETABLISSEMENTS MICHELIN, 63000 Clermont-Ferrand (FR)
(72) Inventeur: MONTOY, Aurélien, 63040 CLERMONT-FERRAND Cedex 9 (FR)
(74) Mandataire: M.F.P. Michelin
(86) Numéro de dépôt international: PCT/FR2021/052100
(87) Numéro de publication internationale: WO 2022/123138

(56) Documents cités:
- WO-A2-2014/096693
- US-A1- 2009 179 644
- US-B2- 9 163 931
- GLOBISCH BJÖRN ET AL: "Terahertz time-domain spectroscopy for non-destructive testing", PROCEEDINGS OF SPIE; [PROCEEDINGS OF SPIE ISSN 0277-786X VOLUME 10524], SPIE, US, vol. 10531, 23 February 2018 (2018-02-23), pages 105310O - 105310O, XP060104658, ISBN: 978-1-5106-1533-5, DOI: 10.1117/12.2290268

## Description

La présente invention se situe dans le domaine de la fabrication de pneumatiques. De manière plus précise, la présente invention concerne le pilotage, la surveillance et le contrôle des procédés de fabrication, notamment en ce qui concerne la température des produits caoutchoutiques formant un pneumatique.

Un procédé de fabrication de pneumatique comporte plusieurs grandes phases :
- une phase de préparation des produits semi-finis entrant dans la composition d'un pneumatique,
- une phase d'assemblage de ces produits selon une architecture initialement définie par les concepteurs, et
- une phase de cuisson, également appelée phase de vulcanisation, de l'assemblage ainsi constitué.

Afin de piloter au mieux les phases de préparation et d'assemblage, il s'avère utile d'effectuer des mesures de température au cours des différentes étapes. Cette mesure de température peut s'effectuer sur un produit simple, comportant une couche unique, ou sur un produit complexe consistant en l'assemblage de différentes couches. Ces mesures sont aujourd'hui effectuées par une méthode de piquage dans la gomme crue. Bien que simple à mettre en œuvre, cette méthode ne garantit pas une précision suffisante de mesure. En effet, étant effectuée manuellement, elle est soumise à de nombreux paramètres difficiles à maîtriser, parmi lesquels : la profondeur de piquage (une mauvaise profondeur conduit à la mesure d'une mauvaise couche dans le cas d'un produit complexe), un temps de piquage pouvant varier d'une mesure à l'autre, et une interprétation de la valeur pouvant varier d'un opérateur à l'autre.

Afin de remédier à ces inconvénients, les responsables qualité des processus de fabrication ont mis en œuvre des marges de sécurité, qui diminuent les performances de production.

Par ailleurs, afin de contrôler l'ensemble du procédé de fabrication, on effectue également des mesures de température en fin de chaîne, à savoir sur le pneumatique déjà cuit. Une telle mesure est actuellement effectuée par l'insertion de thermocouple dans la gomme cuite, ce qui conduit à une dégradation, voire une destruction du produit sur lequel la mesure est effectuée.

La présente invention vise donc à remédier à ces inconvénients en proposant une méthode précise et non invasive pour mesurer la température d'au moins une couche d'un matériau polymérique multicouche. WO 2014/096693A2 montre un système pour la détermination non invasive de la température d'un échantillon de silicium. L'objet est irradié par un faisceau térahertz et le rayonnement réfléchi est analysé à l'aide d'une réflectométrie optique dans le domaine temporel.

Dans un mode de réalisation particulier, l'invention proposera un procédé permettant de déterminer la température des différentes couches de matériau caoutchoutique d'un pneumatique, et ce pendant n'importe quelle phase de fabrication.

Ainsi, l'invention concerne un procédé de détermination de la température d'au moins une couche d'un produit polymérique multicouche,
le procédé comprenant les étapes suivantes :
- on positionne le produit à mesurer sur une table de transport,
- on fait défiler le produit sous un bâti comportant au moins un capteur Térahertz,
- on émet un rayonnement Térahertz (balayant une partie du spectre Térahertz) incident en direction du produit,
- on détecte le signal correspondant à un spectre multiple (balayage de fréquence - dépendant du type de produit) de rayons Térahertz réfléchis par les interfaces rencontrées par le rayon incident,
- on effectue une analyse du signal pour déterminer différents pics correspondant aux différentes interfaces rencontrées,
- on détermine, en fonction de l'amplitude de chaque pic, la température de chaque couche de matériau traversée par le rayon incident.

L'émission du rayonnement Térahertz est effectuée à plusieurs fréquences par un système de balayage du spectre désiré. De manière avantageuse, l'émission est effectuée avec une incidence perpendiculaire, ou sensiblement perpendiculaire au produit. De manière avantageuse également, cette émission est effectuée dans le plan focal.

Ce spectre est choisi en fonction de l'absorption des matériaux à analyser, de la précision souhaitée et de l'épaisseur de l'échantillon.

L'onde Térahertz émise est renvoyée en partie par chaque interface de produits qu'elle rencontre. Chacun des signaux renvoyés est analysé pour déduire deux informations : la vitesse de propagation de l'onde et l'atténuation de l'onde.

En effet, la forme de l'onde reçue peut être modélisée sous une forme complexe n = n'+i*n", où
- n est l'amplitude de l'onde THz renvoyée pour chaque interface,
- n' est la partie Réel de l'onde THz (indice de réfraction), représentant la vitesse de propagation qui permet de déterminer l'épaisseur de la couche par la mesure du temps de propagation de l'onde, et
- n" est la partie Imaginaire de l'onde représentant l'atténuation de l'onde THz (coefficient d'absorption).

Or, on a constaté, de manière surprenante, que la variation de température d'un échantillon fait varier l'amplitude de l'onde Térahertz en gardant stable le temps de propagation.

Par conséquent, l'analyse des différents pics du signal permet de déterminer les températures des différents milieux rencontrés.

On précise ici que la variation d'amplitude est différente (forme, progression ...) d'une famille caoutchoutique à l'autre. Il est donc utile de créer des abaques pour chaque type de famille. La création d'un abaque se fait à partir d'un échantillon de gomme instrumentée par une sonde thermocouple. L'échantillon est alors chauffé, puis refroidit naturellement à l'air. Pendant ces deux phases, l'abaque peut être créé en mettant en corrélation les données Térahertz et les données Thermocouple.

A partir de ces données, il est donc possible de déterminer la température d'un échantillon mono ou multicouche à partir d'un abaque préalablement défini et de l'amplitude de l'interface sortante.

On précise ici que, pour pouvoir effectuer la détermination de température, il est nécessaire de connaître l'indice de réfraction du support.

Ainsi, un procédé selon l'invention permet de faire une mesure de température précise et non invasive. Cette mesure peut être effectuée sur tout type de produit, et quel que soit leur état.

Ainsi, dans un mode de réalisation, le produit polymérique multicouche est un produit formé de plusieurs couches de matériau caoutchoutique, avant ou après cuisson. Par ailleurs, le produit est avantageusement un pneumatique, une chenille ou une bande transporteuse. Il peut néanmoins être utilisé pour tout produit formé d'une ou plusieurs couches en matériau polymère, et plus préférentiellement en matériau élastomérique. Il peut également être appliqué à un tel produit comprenant en outre des éléments de renforts métalliques ou textiles.

Cette mesure étant réalisée de manière automatique, elle n'est donc pas assujettie à la dispersion des mesures réalisées manuellement. Un tel procédé permet donc d'obtenir des mesures plus fiables, et de réduire les marges de sécurité garantissant la qualité des produits finis. L'utilisation de ce procédé permet donc d'atteindre une meilleure efficacité de production, à la fois par l'augmentation de la cadence de production, et la diminution des produits non conformes.

Dans un mode de réalisation avantageux, un procédé selon l'invention comprend une étape de traitement du signal brut avant l'étape d'analyse.

Dans un mode de réalisation avantageux, la vitesse de défilement du produit est comprise entre 0 et 70 mètres par minute.

Dans une mode de réalisation avantageux, la cadence d'acquisition du capteur Térahertz est supérieure à 100Hz.

Un autre objet de l'invention concerne un procédé de détermination des caractéristiques d'au moins une couche d'un produit polymérique multicouche, le procédé comprenant l'ensemble des étapes d'un procédé de détermination de température selon l'un des modes de réalisation précédents, et comprenant en outre une étape de détermination, en fonction de l'écart entre deux pics du signal, de l'épaisseur de chaque couche de matériau traversée par le rayon incident.

En effet, on a constaté que lorsqu'un rayon Térahertz incident atteint une couche de matériau polymérique, les caractéristiques du rayon réfléchi dépendent de l'épaisseur de la couche.

Un autre objet de l'invention est enfin un système permettant la mise en œuvre d'un procédé tel que précédemment décrit.

Ainsi, l'invention concerne un système de détermination des caractéristiques d'au moins une couche d'un produit polymérique multicouche, comportant :
- une table de support permettant le défilement d'un produit polymérique multicouche,
- un capteur Térahertz,
- des moyens d'acquisitions et d'analyse d'un signal réfléchi par le produit polymérique,
- des moyens de détermination de la température d'une couche du matériau multicouche en fonction de l'analyse du signal réfléchi.

Dans un mode de réalisation préférentiel, le système comprend en outre des moyens de détermination de l'épaisseur d'une couche du matériau en fonction de l'analyse du signal réfléchi.

D'autres avantages et modes de réalisation de la présente invention apparaîtront avec la description, effectuée à titre non limitatif, des différentes figures illustratives, parmi lesquelles :
- la [Fig 1] montre un système permettant la mise en œuvre d'un procédé selon l'invention,
- la [Fig 2] montre schématiquement l'impact d'un rayonnement Térahertz sur un produit multicouche,
- la [Fig 3] montre le signal brut et traité issu de l'acquisition par un capteur Térahertz mis en œuvre dans l'invention.

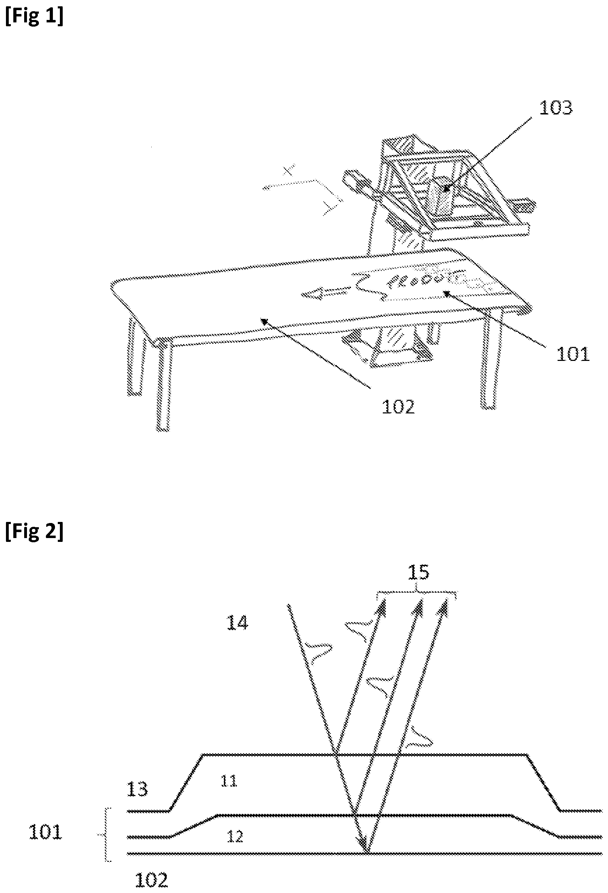

Dans un exemple de réalisation d'un procédé selon l'invention, illustré à l'aide de la figure 1, un produit multicouche 101 est positionné sur une table support 102. Cette table est munie de moyens permettant un défilement du produit dans la direction X. La table est surmontée d'un bâti sur lequel est agencé un capteur Térahertz 103. La vitesse de défilement du produit est réglée en fonction de la vitesse d'acquisition du capteur Térahertz. Elle est préférentiellement comprise entre 10 et 70 mètres par minute.

La figure 2 montre schématiquement un produit 1 comportant deux couches 11 et 12 formant respectivement des milieux ayant des indices de réfraction différents, n1 et n2. Ce produit 1 est posé sur un support 102 (correspondant à la table 102 dans la figure précédente) présentant un indice de réfraction encore différent, et la surface supérieure de la couche 11 est en contact avec l'air ambiant 13.

Lorsque le capteur Térahertz émet un rayonnement, un rayon THz incident atteint le produit 1. Ce produit présente en réalité trois interfaces : une interface entre l'air et la couche 11, une interface entre la couche 11 et la couche 12, et une interface entre la couche 12 et le support 102.

Lorsque l'impulsion THz incidente 14 traverse une interface, une fraction de l'impulsion est réfléchie. Ainsi, lorsque l'impulsion THz se propage dans le produit multicouche, un train d'impulsions 15 est réfléchi.

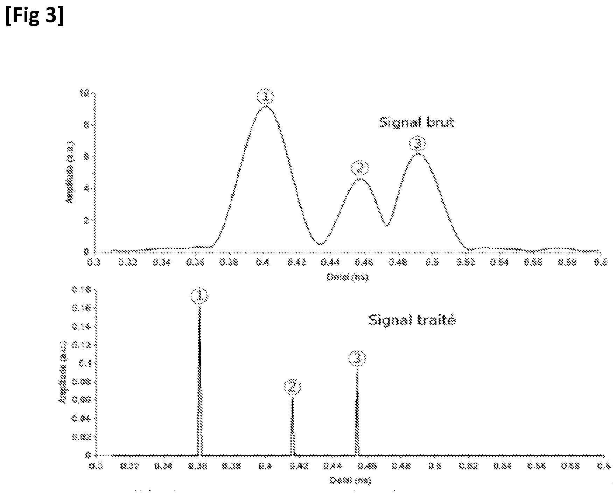

La figure 3 montre la forme du signal représentant un train d'impulsions acquis sur un produit comportant deux couches de matériau caoutchoutique.

La courbe du haut montre le signal brut, et la courbe du bas montre le signal après un pré-traitement destiné à faciliter l'analyse.

On sait que le délai entre deux impulsions consécutives est directement proportionnel à l'épaisseur de matériau traversée. Le calcul de l'épaisseur d'une couche à partir du délai entre deux impulsions consécutives est effectué à partir de la partie réelle de l'indice de réfraction. Ce nombre, caractéristique du matériau composant la couche, traduit la vitesse de propagation de l'impulsion THz dans celle-ci. Ainsi, sur le signal traité montré en figure 3, l'épaisseur de la couche 11 est déterminée en mesurant le décalage temporel entre le pic 1 et le pic 2, et l'épaisseur de la couche 12 est déterminé en mesurant le décalage temporel entre le pic 2 et le pic 3.

## Revendications

1. Procédé de détermination de la température d'au moins une couche d'un produit polymérique multicouche (101), le procédé comprenant les étapes suivantes :
- on positionne le produit à mesurer sur une table de transport (102),
- on fait défiler le produit sous un bâti comportant au moins un capteur Térahertz (103),
- on émet un rayonnement Térahertz incident (14) en direction du produit (101),
- on détecte le signal correspondant à un train d'impulsions (15) réfléchies par les interfaces rencontrées par le rayon incident,
- on effectue une analyse du signal pour déterminer différents pics correspondant aux différentes interfaces rencontrées,
- on détermine, en fonction de l'amplitude de chaque pic, la température de chaque couche de matériau traversée par le rayon incident.

2. Procédé de détermination selon la revendication 1, dans lequel le produit polymérique multicouche est un produit formé de plusieurs couches de matériau caoutchoutique, avant ou après cuisson.

3. Procédé de détermination selon la revendication 2, dans lequel le produit est un pneumatique, une chenille ou une bande transporteuse.

4. Procédé de détermination selon l'une des revendications précédentes, comprenant une étape de traitement du signal brut avant l'étape d'analyse.

5. Procédé de détermination de la température selon l'une des revendications précédentes, dans lequel la vitesse de défilement du produit est comprise entre 0 et 70 mètres par minute.

6. Procédé de détermination selon l'une des revendications précédentes, dans lequel la cadence d'acquisition du capteur Térahertz est supérieure à 100Hz.

7. Procédé de détermination des caractéristiques d'au moins une couche d'un produit polymérique multicouche, le procédé comprenant l'ensemble des étapes d'un procédé de détermination de température selon l'une des revendications précédentes, et comprenant en outre une étape de détermination, en fonction de l'écart entre deux pics du signal, de l'épaisseur de chaque couche de matériau traversée par le rayon incident.

8. Système de détermination des caractéristiques d'au moins une couche d'un produit polymérique multicouche, comportant :
- une table de support (102) permettant le défilement d'un produit polymérique multicouche (101),
- un capteur Térahertz (103),
- des moyens d'acquisitions et d'analyse d'un signal réfléchi par le produit polymérique (101),
- des moyens de mise en œuvre d'un procédé de détermination de la température d'une couche du matériau multicouche selon l'une des revendications 1 à 6.

9. Système selon la revendication 8, comprenant en outre des moyens de mise en œuvre d'un procédé de détermination d'une épaisseur d'une couche du matériau selon la revendication 7.

## Patentansprüche

1. Verfahren zur Bestimmung der Temperatur mindestens einer Lage eines mehrschichtigen Polymerprodukts (101), wobei das Verfahren die folgenden Schritte umfasst:
- man positioniert das zu messende Produkt auf einem Transporttisch (102),
- man lässt das Produkt unter einem Gestell durchlaufen, das mindestens einen Terahertz-Sensor (103) aufweist,
- man emittiert eine einfallende Terahertz-Strahlung (14) in Richtung des Produkts (101),
- man detektiert das Signal, das einer Folge von Impulsen (15) entspricht, die von den Grenzflächen reflektiert werden, auf welche die einfallende Strahlung trifft,
- man führt eine Analyse des Signals durch, um verschiedene Peaks zu bestimmen, die den verschiedenen getroffenen Grenzflächen entsprechen,
- man bestimmt, in Abhängigkeit von der Amplitude jedes Peaks, die Temperatur jeder von dem einfallenden Strahl durchdrungenen Materiallage.

2. Verfahren zur Bestimmung nach Anspruch 1, wobei das mehrlagige Polymerprodukt ein aus mehreren Kautschukmateriallagen gebildetes Produkt vor oder nach dem Vulkanisieren ist.

3. Verfahren zur Bestimmung nach Anspruch 2, wobei das Produkt ein Luftreifen, eine Raupe oder ein Förderband ist.

4. Verfahren zur Bestimmung nach einem der vorhergehenden Ansprüche, umfassend einen Schritt des Verarbeitens des Rohsignals vor dem Analyseschritt.

5. Verfahren zur Bestimmung der Temperatur nach einem der vorhergehenden Ansprüche, wobei die Durchlaufgeschwindigkeit des Produkts zwischen 0 und 70 Meter pro Minute beträgt.

6. Verfahren zur Bestimmung nach einem der vorhergehenden Ansprüche, wobei der Erfassungstakt des Terahertz-Sensors mehr als 100 Hz beträgt.

7. Verfahren zur Bestimmung der Merkmale mindestens einer Lage eines mehrlagigen Polymerprodukts, wobei das Verfahren sämtliche Schritte eines Verfahrens zur Temperaturbestimmung nach einem der vorhergehenden Ansprüche umfasst und ferner einen Schritt des Bestimmens, in Abhängigkeit vom Abstand zwischen zwei Peaks des Signals, der Dicke jeder von dem einfallenden Strahl durchdrungenen Materiallage umfasst.

8. System zur Bestimmung der Merkmale mindestens einer Lage eines mehrlagigen Polymerprodukts, aufweisend:
- einen Auflagetisch (102), der das Durchlaufen eines mehrlagigen Polymerprodukts (101) ermöglicht,
- einen Terahertz-Sensor (103),
- Mittel zur Erfassung und Analyse eines von dem Polymerprodukt (101) reflektierten Signals,
- Mittel zur Implementierung eines Verfahrens zur Bestimmung der Temperatur einer Lage des mehrlagigen Materials nach einem der Ansprüche 1 bis 6.

9. System nach Anspruch 8, umfassend ferner Mittel zur Implementierung eines Verfahrens zur Bestimmung einer Dicke einer Lage des Materials nach Anspruch 7.

## Claims

1. Method for determining the temperature of at least one layer of a multilayer polymer product (101),
the method comprising the following steps:
- positioning the product to be measured on a transport table (102),
- advancing the product under a frame comprising at least one terahertz sensor (103),
- emitting incident terahertz radiation (14) in the direction of the product (101),
- detecting the signal corresponding to a series of pulses (15) reflected by the interfaces encountered by the incident ray,
- analysing the signal to determine various peaks corresponding to the various interfaces encountered,
- determining, on the basis of the amplitude of each peak, the temperature of each layer of material through which the incident ray passes.

2. Determination method according to Claim 1, wherein the multilayer polymer product is a product made up of several layers of rubber material, before or after curing.

3. Determination method according to Claim 2, wherein the product is a tyre, a caterpillar track or a conveyor belt.

4. Determination method according to one of the preceding claims, comprising a step of processing the raw signal before the analysis step.

5. Temperature determination method according to one of the preceding claims, wherein the speed at which the product advances is between 0 and 70 meters per minute.

6. Determination method according to one of the preceding claims, wherein the acquisition rate of the terahertz sensor is greater than 100 Hz.

7. Method for determining the characteristics of at least one layer of a multilayer polymer product, the method comprising all the steps of a temperature determination method according to one of the preceding claims, and further comprising a step of determining, as a function of the difference between two peaks of the signal, the thickness of each layer of material through which the incident ray passes.

8. System for determining the characteristics of at least one layer of a multilayer polymer product, comprising:
- a support table (102) for advancing a multilayer polymer product (101),
- a terahertz sensor (103),
- means for acquisition and analysis of a signal reflected by the polymer product (101),
- means for implementing a method for determining the temperature of a layer of the multilayer material according to one of Claims 1 to 6.

9. **System according to Claim 8, further comprising means for implementing a method for determining a thickness of a layer of the material according to Claim 7.**
